# EUROPÄISCHE PATENTSCHRIFT

(11) **EP 0 726 929 B1**
(45) Veröffentlichungstag und Bekanntmachung des Hinweises auf die Patenterteilung: **24.11.1999**
(21) Anmeldenummer: 94927550.7
(22) Anmeldetag: 02.09.1994
(51) Int. Cl.: C10G 35/04, B01J 8/02

(54) **KATALYTISCHES REFORMIERUNGSVERFAHREN UND REAKTOR**
CATALYTIC REFORMING PROCESS AND REACTOR
PROCEDE DE REFORMAGE CATALYTIQUE ET REACTEUR

(43) Veröffentlichungstag der Anmeldung: 21.08.1996
(73) Patentinhaber: Lapunow, Michael Grigorjewitsch, Gomel, 246035 (BY); Abramow, Walerie Iwanowitsch, Gomel, 246028 (BY); Sommerfeld, Volker, 18190 Sanitz (DE)
(72) Erfinder: LAPUNOW, Michael Grigorjewitsch, Gomel, 246035 (BY); ABRAMOW, Walerie Iwanowitsch, Gomel, 246028 (BY); SOMMERFELD, Volker, D-18190 Sanitz (DE); PUSCHKAREW, Aleksander Petrowitsch +di, DECEASED (BY); BOLSEWITSCH, Peter Wasiliewitsch, Gomel, 246031 (BY)
(74) Vertreter: Glawe, Delfs, Moll & Partner
(86) Internationale Anmeldenummer: EP9402932
(87) Internationale Veröffentlichungsnummer: WO9607712

(56) Entgegenhaltungen:
- DE-A- 1 812 734
- FR-A- 1 188 028
- FR-A- 2 633 635
- US-A- 4 478 793

## Beschreibung

Die Erfindung betrifft das Gebiet der Erdölverabeitung bzw. Petrochemie, konkret Verfahren zur Verarbeitung von Kohlenwasserstoffen und Vorrichtungen zu deren Durchführung, insbesondere zu Motortreibstoffen, wie diese in Ullmann's Encyclopaedia of Industrial Chemistry, Vol. A 16, Verlag Chemie Weinheim, 1990, S. 719 - 753, beschrieben sind; auf den gesamten Inhalt dieser Vorveröffentlichung wird hier Bezug genommen.

Unter katalytischem Reformieren versteht man allgemein einen Veredelungsschritt in der Petrochemie, insbesondere die thermische und/oder katalytische Umwandlung bestimmter Erdölprodukte, insbesondere Schwerbenzine und sogenannte straightrun-Benzine in Aromaten und Isoparaffine. Zweck des Reformierens ist die Erhöhung der Oktanzahl von Motorkraftstoffen sowie die Gewinnung von für die chemische Industrie geeigneten Nebenprodukten wie die BTX-Fraktion. Die Einzelheiten des Reformierens sind gut dokumentiert; nur beispielsweise wird hier auf Ullmann's Encyclopaedia of Industrial Chemistry, Vol. A 18, Verlag Chemie Weinheim, 1991, S. 51 - 99, insbesondere S. 67 - 70 (Catalytic Reforming) Bezug genommen.

Aus (1) E.V. Smidovich, Tekhnologya pererabotky nefty i gaza, Verlag "Khimya", Moskau, 1968, Teil 2, S. 243 - 245, ist ein Verfahren zur Herstellung von Benzin mit hoher Oktanzahl durch katalytisches Reformieren von Benzinfraktionen mit niedriger Oktanzahl bei Temperaturen von 500 ± 50°C und einen Druck bis zu 3,5 MPa unter Verdünnung des Einsatzgemisches durch im Kreislauf geführtes wasserstoffhaltiges Gas in einer Menge von 1500Nm³/Nm³ Einsatzgemisch bei einer Molkonzentration des Wasserstoffes in dem wasserstoffhaltigen Kreislaufgas von mindestens 75 % in Gegenwart eines Alumoplatinkatalysators mit einem Gehalt an metallischem Platin von maximal 0,63 % bei einer Raumgeschwindigkeit des Einsatzgemisches von 1,5 bis 1,8 Nm³/Nm³ Katalysator bekannt.

Das Ausgangsgemisch und das Dampf-Gasgemisch werden durch das Katalysatorbett parallel zur vertikalen Achse (axial) des Reaktors geleitet, der ein vertikales zylindrisches Gefäß mit einem axialen vollmetallischen Rohr zum Abzug eines gasförmigen Produktgemisches und einem darin angeordneten, Durchlässe aufweisenden metallischen Einsatz darstellt, wobei sich zwischen den Wänden des Einsatzes und dem zentralen Rohr eine Katalysatorschüttung befindet.

Dieses Verfahren zur Herstellung von Benzin mit hoher Oktanzahl hat jedoch die folgenden Nachteile:
1. hohe hydraulische Verluste beim Durchgang des Dampf-Gasgemisches durch das Katalysatorbett aufgrund einer hohen linearen Strömungsgeschwindigkeit wegen der begrenzten wirksamen Querschnittsfläche des Katalysatorbettes;
2. Anwesenheit von Katalysatorstaub, der sich unter den Prozeßbedingungen am Ausgang des gasförmigen Produktgemisches aus dem Katalysatorbett ansammelt und den wirksamen Querschnitt verringert;
3. erhöhter Druck im System, der zur Verschiebung der chemischen Umwandlung des Kohlenwasserstoffeinsatzmaterials in Richtung der Bildung geringwertiger Reformierungsprodukte (Nebenprodukte) führt; der Anteil an Hydrocracking-Produkten wächst.

Ferner ist aus (2), (Khimya i tekhnologya topliv i masel, Verlag "Khimya", Moskau, 1966, Nr. 3, S. 14), *ein* Verfahren zur Herstellung von Benzin mit hoher Oktanzahl durch katalytisches Reformieren eines Gemisches aus Wasserstoff und Kohlenwasserstoffen durch Hindurchleiten dieses Gemisches durch einen in Form eines Hohlzylinders angeordneten Platin-Rhenium-Katalysators bei 450-500°C und einem Druck von 1,5-3 MPa(2) bekannt. Das Einsatzgemisch strömt in Richtung vom Umfang des Reaktors zu dessen Achse. Die in diesem Verfahren zum Einsatz kommenden Platin-Rhenium-Katalysatoren sind beschrieben und im Handel erhältlich.

Das Benzin mit hoher Oktanzahl wird durch katalytisches Reformieren von Benzinfraktionen mit niedriger Oktanzahl bei einer Temperatur von 450-500°C und einem Druck von 2,8 bis 5,0 MPa unter Verdünnen des Einsatzgemisches durch wasserstoffhaltiges Kreislaufgas in einer Menge von 1500 Nm³/Nm³ Einsatz bei einer Molkonzentration des Wasserstoffs in dem wasserstoffhaltigen Kreislaufgas von 85 % (das Molverhältnis von Wasserstoff zu Einsatz beträgt in der Regel 8:1) in Gegenwart des Platin-Rhenium-Katalysator mit einem Gehalt an metallischem Platin von 0,30-0,65 % bei einer Raumgeschwindigkeit des Einsatzgemisches von 1,5-1,8 m³/h pro m³ Katalysator hergestellt.

Die Nachteile dieses Verfahrens sind:
1. Ungenügende Ausbeute an Produkt - bis zu 93,86 % (vgl. Beispiel 1, das den Stand der Technik wiedergibt);
2. Die niedrige Oktanzahl des Produktes - 77,2 gemäß MON (motor octan number).
Aufgabe der Erfindung war es, die Ausbeute an Produkt mit hoher Oktanzahl zu erhöhen und dessen Qualität zu verbessern.

Aus FR-A-2633635 ist ein Verfahren bekannt zur Herstellung von Benzin hoher Oktanzahl durch katalytisches Reformieren eines Gemisches aus Wasserstoff und Kohlenwasserstoffen durch Hindurchleiten dieses Gemisches durch einen in Form eines Hohlzylinders angeordneten Platin-Rhenium-Katalysator bei 450 - 500°C und einem Druck von 0,1 - 3,5 MPa. Der Reaktionszone des Katalysators wird mittels eines Wärmetauschers und einer Wärmeträgerflüssigkeit ständig Energie zugeführt.

In FR-A-1 188 028 ist ein Verfahren zum Herstellen von Motortreibstoff durch Katalytisches Reformieren beschrieben. Das Katalysator material ist im Reaktor zwischen einem mit öffnungen versehenen Rohr als Innenwand und einem Sieb als Außenwand angeordnet. Das Gasgemisch wird in radialer Richtung durch den Katalysator durchgeführt.

In einem Verfahren zur Herstellung von Benzin mit hoher Oktanzahl durch katalytisches Reformieren eines Gemisches aus Wasserstoff und Kohlenwasserstoffen durch Hindurchleiten dieses Gemisches durch einen in Form eines Hohlzylinders angeordneten Platin-Rhenium-Katalysators bei 450-500 °C und einem Druck von 1,5-3 MPa in einer zur Zylinderachse senkrechten Richtung von der Zylinderachse zu dessen Umfang hin erfolgt erfindungsgemäß das Hindurchleiten des Einsatzgemisches mit einer Raumgeschwindigkeit von 1,5-1,8 h⁻¹.

Das Volumenverhältnis von wasserstoffhaltigem Gas zu den Kohlenwasserstoffen (im folgenden: "Strömungsfaktor") beträgt vorzugsweise 1200 - 1800 Nm³/Nm³ KW (KW = Kohlenwasserstoff).

Mit den vorstehend aufgeführten Merkmalen der Erfindung wird folgender technischer Effekt erzielt.

Bei den am Katalysator möglichen Reaktionen verschiebt sich das Gleichgewicht in Richtung Erhöhung der prozentualen Ausbeute an Cyclopentanen und Isoparaffinen, wobei gleichzeitig die Menge an aromatischen Kohlenwasserstoffen geringfügig abnimmt und die Ausbeute an gasförmigen Stoffen sich verringert (was zu einer Erhöhung der Stabilität des Katalysators führt). Dies ist dadurch bedingt, daß im Gegensatz am zum nächsten kommenden Stand der Technik beim erfindungsgemäßen Verfahren das Einsatzgemisch zunächst mit einer relativ geringen Menge an Katalysator in Kontakt kommt, die sich auf dem weiteren Strömungsweg des Einsatzgemisches durch das Katalysatorbrett unter gleichzeitiger Änderung der Zusammensetzung des Einsatzgemisches erhöht.

Wird das Einsatzgemisch durch das Katalysatorbrett mit einer Raumgeschwindigkeit von weniger als 1,5 h-¹ geleitet, so wird sich die Zusammensetzung des Katalysats von der beim Stand der Technik gemäß (2) geringfügig, und zwar um maximal 3 - 5 % unterscheiden.

Wird das Einsatzgemisch aber mit einer Raumgeschwindigkeit von > 1,8 h-¹ durch das Katalysatorbrett hindurchgeleitet, kann der Raktor nicht in der Lage sein, das Einsatzgemisch vollständig zu verarbeiten.

Beträgt der Strömungsfaktor weniger als 1200 Nm³/Nm³ KW, wird sich die Koksausbeute erhöhen.

Beträgt der Strömungsfaktor mehr als 1800 Nm³/Nm³ KW, verringert sich die Menge an Iso-Kohlenwasserstoffen und cyclischen Kohlenwasserstoffen geringfügig (um 3 - 5 %).

Das erfindungsgemäße Verfahren unterscheidet sich von dem gemäß (2) dadurch, daß das Einsatzgemisch durch das Katalysatorbrett in Richtung von der Achse des Zylinders zu dessen Umfang hin hindurchgeleitet wird. Somit erfüllt das erfindungsgemäße Verfahren das Erfindungskriterium "Neuheit".

Das erfindungsgemäße Verfahren kann in der petrochemischen und erdölverarbeitenden Industrie angewandt werden, es erlaubt die Ausbeute an Benzin mit hoher Oktanzahl zu erhöhen und dessen Qualität zu verbessern.

Das erfindungsgemäße Verfahren kann mit Hilfe einer wei.teren Erfindung, und zwar eines Reaktors zum katalytischen Reformieren, durchgeführt werden.

Bekannt ist ein Reaktor zur Herstellung von Benzin mit hoher Oktanzahl durch katalytisches Reformieren, enthaltend ein Gehäuse mit Öffnungen zum Eintritt des Einsatzgemisches und zum Austritt an Katalysat, einen im Gehäuse zur Außenwandung und zur Gehäuseinnenfläche beabstandet angeordneten hohlen Einsatz mit einer Innen- und einer Außenwand, die koaxial angeordnet und mit Durchlässen versehen sind, wobei an beiden Stirnseitendes Einsatzes Abdeckelemente angebracht sind, von denen das eine ringförmig ausgebildet und zwischen der Innenfläche des Gehäuses und der Innenwandung des Einsatzes angeordnet ist, wohingegen das zweite Abdeckelement die Form eines Kreises aufweist und die Stirnseite des Einsatzes vollständig abdeckbar angebracht ist (2).

Dieser Reaktor ist zur Durchführung des erfindungsgemäßen Verfahrens nicht geeignet, da in ihm das Gas vom Umfang des Reaktors zur Mitte hin strömt.

In einem Reaktor zur Herstellung von Benzin mit einer hohen Oktanzahl durch katalytisches Reformieren, enthaltend ein Gehäuse mit Öffnungen zum Eintritt des Einsatzgemisches und zum Austritt von Katalysat, einen im Gehäuse zu dessen Außenwandung und der Gehäuseinnenfläche beabstandet angeordneten hohlen Einsatz mit einer Innen- und einer Außenwand, die koaxial angeordnet und mit Durchlässen versehen sind, wobei an beiden Stirnseiten des Einsatzes Abdeckelemente angeordnet sind, von denen das eine ringförmig ausgebildet und zwischen der Innenfläche des Gehäuses und der Innenwand des Einsatzes angeordnet ist, und das andere Abdeckelement die Form eines Kreises aufweist und die Stirnseite des Einsatzes vollständig abdeckbar angeordnet ist, ist erfindungsgemäß das ringförmige Abdeckelement auf der Seite der Eintrittsöffnung für das Einsatzgemisch angeordnet, wohingegen das Abdeckelement in Form eines Kreises auf der Seite der Austrittsöffnung für das Katalysat angebracht ist.

Bei einer ersten Ausführungsform (Anspruch 3) ist die Innenwand des Einsatzes zylindrisch ausgebildet, wobei deren Durchlässe so angeordnet sind, daß sich der Abstand zwischen ihnen in Richtung der Achse des Einsatzes von der Stirnseite an der Eintrittsöffnung für das Einsatzgemisch bis zur anderen Stirnseite hin verringert.

Der Abstand zwischen den Durchlässen kann sich um das 1,2-2,5-fache verringern. Dabei bleibt aber der Durchmesser der Durchlässe konstant.

Bei einer zweiten Ausführungsform (Anspruch 5) weist die Innenwand des Einsatzes einen Durchmesser auf, der sich in Richtung der Achse des Einsatzes von dessen Stirnseite an der Eintrittsöffnung für das Einsatzgemisch bis zur anderen Stirnseite hin erhöht. Diese Ausbildung erlaubt es, konstante hydrodynamische Bedingungen für den Eintritt des Gases in den Reaktor entlang der gesamten Länge des Einsatzes aufrechtzuerhalten.

Die Innenwand des Einsatzes kann insbesondere konisch oder, im Axialschnitt gesehen, stufenförmig ausgebildet sein.

Gemäß einer bevorzugten Ausführungsform der Erfindung kann die Innenwand des Einsatzes im Axialschnitt gesehen derart stufenförmig sein, daß die axiale Querschnittsfläche der Stufen sich in Richtung der Achse des Einsatzes von dessen Stirnseite an der Eintrittsöffnung für das Einsatzgemisch bis zur anderen Stirnseite hin erhöht. Insbesondere kann sich die axiale Querschnittsfläche um das 1,2 - 2,5-fache erhöhen.

Die erwähnten Abdeckelemente können aus zwei oder mehreren Teilen bestehen.

Die zweiteilige Ausbildung der Abdeckelemente stellt eine wesentliche Erleichterung bei der Wartung des Reaktors dar.

Der erfindungsgemäße Reaktor unterscheidet sich von dem gemäß (1) dadurch, daß das ringförmige Abdeckelement auf der Seite der Eintrittsöffnung für das Einsatzgemisch angeordnet ist, wohingegen das Abdeckelement in Kreisform auf der Seite der Austrittsöffnung für das Katalysat angebracht ist.

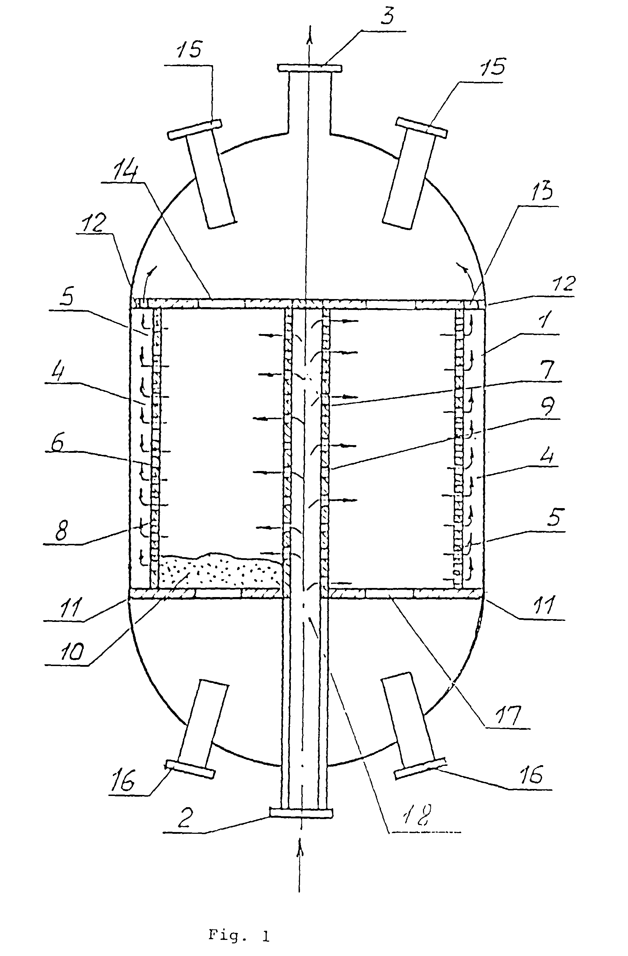

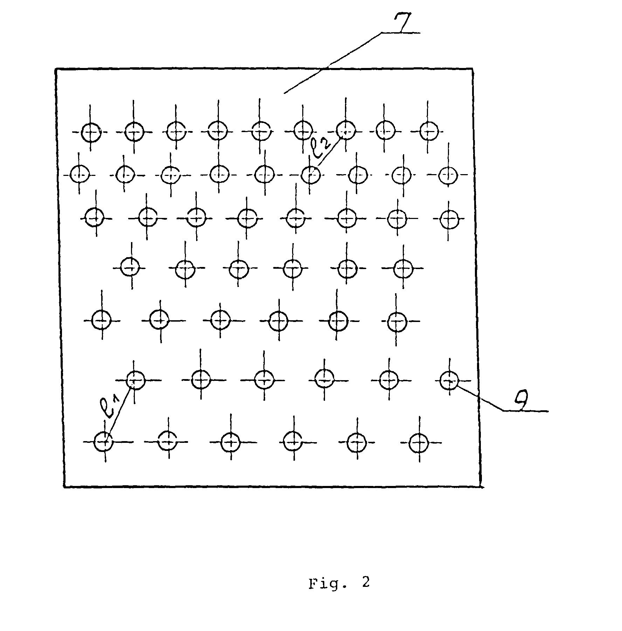

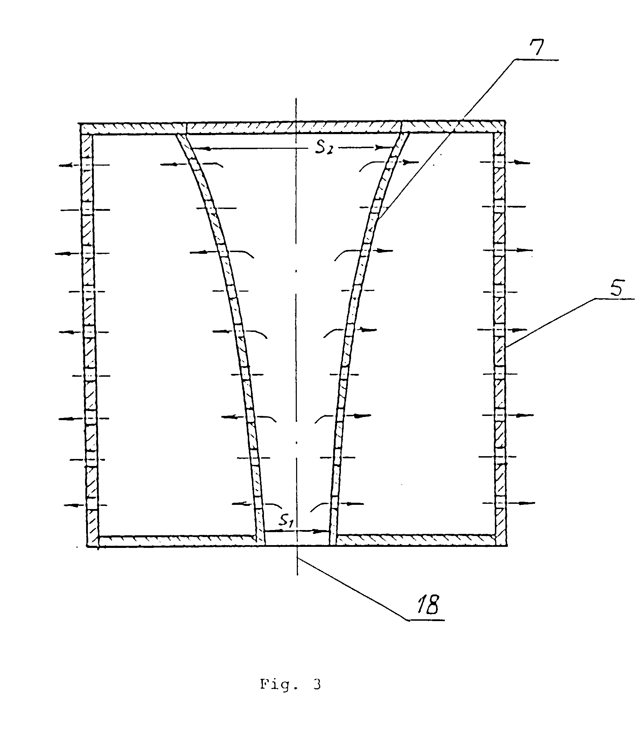

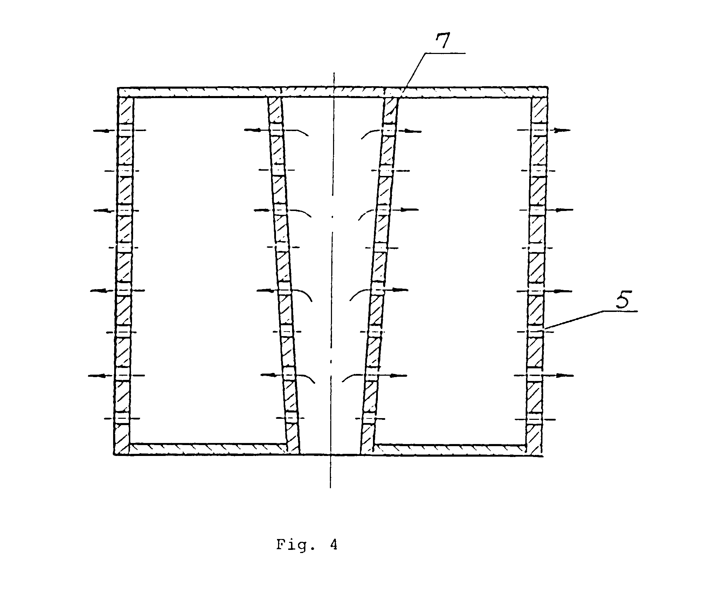

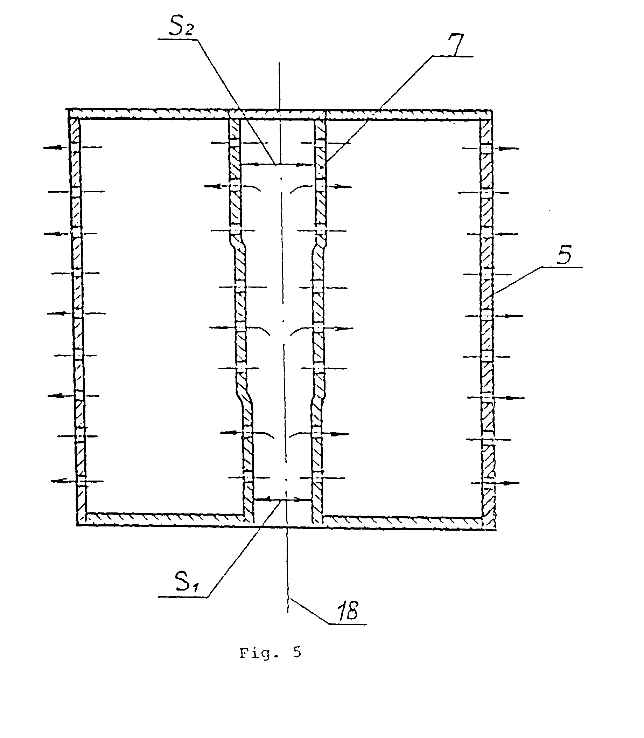

Eine Ausführungsform des erfindungsgemäßen Reaktors ist in den Figuren 1 bis 6 dargestellt.

In Figur 1 ist eine Gesamtansicht des Reaktors dargestellt. Der Reaktor enthält ein Gehäuse 1 mit Flanschen 2 und 3, die Öffnungen für den Eintritt des Einsatzgemisches bzw. den Austritt des Katalysats aufweisen. Im Gehäuse 1 ist mit einem Abstand 4 ein hohler Einsatz 5 angeordnet, der eine Außenwand 6 und eine Innenwand 7 aufweist, die mit Durchlässen 8 bzw. 9 versehen sind. Die Außenwand 6 weist eine zylindrische Form auf. In Figur 1 hat die Innenwand 7 ebenfalls eine zylindrische Form. Zwischen den Wänden 6 und 7 ist ein Platin-Rhenium-Katalysator 10 angeordnet. Zwischen der Innenfläche des Gehäuses 1 und der Innenwand 7 des Einsatzes 5 ist ein ringförmiges Abdeckelement 11 angeordnet, das zwecks Montageerleichterung zweiteilig ausgebildet ist (es besteht aus dem ringförmigen Teil , das den Zwischenraum 4 überdeckt und dem ringförmigen Teil , das einen Teil der Stirnseite des Einsatzes zwischen dessen Wänden überdeckt). Das Reaktorgehäuse weist Durchlässe 16 für den Katalysatoraustrag auf.

Das in Kreisform ausgebildete Abdeckelement 12 ist auf der anderen Stirnseite des Einsatzes 5 angebracht und überdeckt diese Stirnseite vollständig. Das Reaktorgehäuse weist Öffnungen 16 zum Katalysatoraustrag auf. Der Reaktor weist ein kreisförmiges Abdeckelement 12 mit Durchlässen 13 für den Austritt des Dampf-Gas-Gemisches auf. Der Reaktor weist auch Flansche 15 und 16 zum Katalysatoreintrag und -austrag auf.

In Figur 2 ist eine Ansicht der Innenwand 7 des Einsatzes 5 mit einen gleichen Durchmesser aufweisenden Durchlässen 9 dargestellt, zwischen denen sich der Abstand | von |₁ bis |₂ ändert, wobei |₁/|₂ = 1,2 - 2,5 ist (z. B. von 75 auf 40 mm bei einem Durchmesser jedes Durchbruches von 15 mm).

In Figur 3 ist eine Ausbildungsform des Einsatzes 5 dargestellt, bei dem die Innenwand 7 einen Durchmesser aufweist, der sich in Richtung der Achse 18 des Einsatzes von der an der Öffnung 2 für den Eintritt des Einsatzgemisches befindlichen Stirnseite bis zur anderen Stirnseite hin erhöht.

In Figur 4 ist eine Ausbildungsform des Einsatzes 5 dargestellt, bei der die Innenwand 7 eine konische Form aufweist (hierbei verläuft die Erweiterung vom Eintritt 2 für das Einsatzgemisch zur gegenüberliegenden Stirnseite).

In Figur 5 ist eine Ausbildungsform des Einsatzes 5 gezeigt, bei der die Innenwand 7 im Axialschnitt gesehen stufenförmig ausgebildet ist. Hierbei erhöhen sich der Durchmesser und die Länge der Stufen in Richtung der Achse 18 des Einsatzes von dessen an der Eintrittsöffnung 2 für das Einsatzgemisch befindlichen Stirnseite bis zur anderen Stirnseite hin. Dabei erhöht sich die axiale Querschnittsfläche der Stufen derart, daß S₂/S₁ = 1,2 - 2,5 ist.

Der Reaktor arbeitet folgendermaßen.

Die Öffnungen 15 und 16 werden geöffnet und in den Zwischenraum zwischen den Wänden 6 und 7 des Einsatzes 5 wird die erforderliche Menge an Katalysator eingebracht. Danach werden die Öffnungen 15 und 16 verschlossen. Der Katalysator wird in einem Inertgasstrom mit einer Temperatur von bis zum 250 °C im Laufe einiger Stunden getrocknet. Das Inertgas wird nach und nach durch ein wasserstoffhaltiges Gas ersetzt, das ebenfalls mit einer Temperatur von 250 °C zugeführt wird. Der Katalysator wird reduziert. Anschließend wird zur Aktivierung des Katalysators eine Hydroxychlorierung durchgeführt. Der Katalysator ist nunmehr betriebsbereit. Bei 250 °C wird nun begonnen, dem Kreislaufgas den Kohlenwasserstoffeinsatz unter gleichzeitiger Erhöhung der Eintrittstemperatur auf die Prozeßtemperatur zuzusetzen. Das Dampf-Gasgemisch strömt durch die Eintrittsöffnung 2, tritt in das Innere des Einsatzes ein, strömt durch die Durchlässe 9 der Innenwand 7 und danach wird das Katalysatorbrett 10, wo es chemischen Reaktionen unterzogen wird, strömt anschließend durch die Durchlässe 8 der Wand 6 in den Zwischenraum 4 und von da durch die Durchlässe 13 des Abdeckelements 12 und verläßt anschließend den Reaktor über die Austrittsöffnung 3. Eben diese Strömungsrichtung des Gas-Dampfgemisches wird durch die Abdeckelemente 11 und 12 gewährleistet.

Die nachstehenden Beispiele erläutern das erfindungsgemäße Verfahren.

### Beispiel 1 (Vergleich gemäß dem Stand der Technik)

Der Prozeß wird in dem Reaktor 1 unter folgenden Bedingungen durchgeführt.

| | |
|---|---|
| Eintrittstemperatur des Gemisches aus Wasserstoff und Kohlenwasserstoffen | 494 °C |
| Austrittstemperatur des Gemisches | 450 °C |
| Druck im Reaktor | 3 MPa |
| Strömungsfaktor | 1.475,5 Nm³ wasserstoffhaltiges Gas pro Nm³ Kohlenwasserstoff |
| | |
| Molverhältnis Wasserstoff/Kohlenwasserstoffe | 8 : 1 |
| Wasserstoffkonzentration im Gas | 80 % |
| Raumgeschwindigkeit | 1,524 h-¹. |

Die Zusammensetzung des Einsatzgemisches und des Produkts am Reaktorausgang ist in Tabelle 1 angeführt.

**Tabelle 1**

| Zusammensetzung (kmol/h) | | | | | | |
|---|---|---|---|---|---|---|
| Stoffstrom | H₂ | Trockengas | Aromaten | Naphthene | n-Paraffine | Iso-Paraffine |
| Einsatzgemisch beim Eintritt in den 1. Reaktor | 9522,32 | 2531,25 | 105,4336 | 338,5622 | 292,1307 | 505,05 |
| | | | | | | |
| Gasgemisch am Ausgang des 1. Reaktors | 9827,56 | 2624,85 | 424,2 | 125,23 | 283,74 | 499,82 |

Das aus dem 1. Reaktor abgezogene Produkt wird dem 2. Reaktor zugeführt, der unter den nachstehenden Bedingungen betrieben wird.

| | |
|---|---|
| Eintrittstemperatur | 496 °C |
| Austrittstemperatur | 473 °C. |

Die übrigen Betriebsbedingungen entsprechen denen im vorangegangenen Reaktor. Die Zusammensetzung des Einsatzgemisches und des Produkts beim Austritt aus dem 2. Reaktor ist in Tabelle 2 angeführt.

**Tabelle 2**

| Zusammensetzung (kmol/h) | | | | | | |
|---|---|---|---|---|---|---|
| Stoffstrom | H₂ | Trockengas | Aromaten | Naphthene | n-Paraffine | Iso-Paraffine |
| Einsatzgemisch beim Eintritt in den 2. Reaktor | 9827,56 | 2624,85 | 424,2 | 125,23 | 283,74 | 499,82 |
| | | | | | | |
| Gasgemisch am Ausgang des 2. Reaktors | 9931,3 | 2745,26 | 476,68 | 71,00 | 272,4 | 496,8 |
| | | | | | | |
| Gasgemisch am Reaktorausgang nach Rekonstruktion | 9373,6 | 2749,01 | 467,33 | 97,7 | 284,9 | 504,0 |

Das Produkt aus dem 2. Reaktor wird dem 3. Reaktor zugeführt.

| | |
|---|---|
| Temperatur beim Eintritt in den 3. Reaktor | 490 °C |
| Austrittstemperatur | 434,2 °C |

Die übrigen Betriebsparameter sind denen im 2. Reaktor analog.

Die Zusammensetzung des Einsatzgemisches und des Produkts beim Austritt aus dem 3. Reaktor ist in Tabelle 3 angeführt.

**Tabelle 3**

| Zusammensetzung (kmol/h) | | | | | | |
|---|---|---|---|---|---|---|
| Stoffstrom | H₂ | Trockengas | Aromaten | Naphthene | n-Paraffine | Iso-Paraffine |
| Einsatzgemisch beim Eintritt in den 3. Reaktor | 9931,3 | 2745,26 | 476,68 | 71,00 | 272,4 | 496,8 |
| Gasgemisch am Ausgang des 3. Reaktors | 10045,18 | 2913,53 | 519,43 | 48,23 | 246,08 | 492,71 |

Bei Durchführung des Prozesses gemäß dem Vergleichsbeispiel (Gas-Dampfgemisch strömt in Richtung vom Umfang zur Mitte des Reaktors hin) beträgt die Ausbeute an Endprodukt 93,86 % bei einer MON-Oktanzahl von 77,2.

### Beispiel 2

Beispiel 1 wird mit dem Unterschied wiederholt, daß in dem 2. Reaktor das Dampf-Gasgemisch in Richtung von der Mitte zum Umfang hin strömt. Die Zusammensetzung des Einsatzgemisches beim Eintritt in den 2. Reaktor entspricht der von Beispiel 1. Die Zusammensetzung des Produkts beim Austritt aus dem 2. Reaktor ist in Tabelle 4 angegeben.

**Tabelle 4**

| Zusammensetzung (kmol/h) | | | | | | |
|---|---|---|---|---|---|---|
| Stoffstrom | H₂ | Trockengas | Aromaten | Naphthene | n-Paraffine | Iso-Paraffine |
| Gasgemisch am Ausgang des 2. Reaktors | 9878,6 | 2749,01 | 467,33 | 97,7 | 284,3 | 504,0 |

Das Produkt des 2. Reaktors wird in den 3. Reaktor eingespeist, der unter denselben Bedingungen wie in Beispiel 1 betrieben wird. Dabei erhält man ein Produkt mit der in Tabelle 5 angeführten Zusammensetzung.

**Tabelle 5**

| Zusammensetzung (kmol/h) | | | | | | |
|---|---|---|---|---|---|---|
| Stoffstrom | H₂ | Trockengas | Aromaten | Napthene | n-Paraffine | Iso-Paraffine |
| Gasgemisch am Ausgang des 3. Reaktors | 9898,86 | 2913,7 | 511,89 | 51,49 | 249,2 | 508,82 |

Bei Durchführung des Prozesses gemäß Beispiel 2 (das Dampf-Gasgemisch strömt im 1. und im 3. Reaktor von dem Umfang zur Mitte des Reaktors hin, wohingegen im 2. Reaktor von der Mitte des Reaktors zum Umfang hin) beträgt die Ausbeute an Endprodukt 94,74 Mass.% bei einer MON-Oktanzahl von 78.

### Beispiel 3

Beispiel 2 wird mit dem Unterschied wiederholt, daß die Temperatur beim Eintritt in den 3. Reaktor 496 °C beträgt. Aus dem 3. Reaktor wird ein Produkt der in Tabelle 6 angegebenen Zusammensetzung abgezogen.

**Tabelle 6**

| Zusammensetzung (kmol/h) | | | | |
|---|---|---|---|---|
| Stoffstrom | Aromaten | Naphthene | n-Paraffine | Iso-Paraffine |
| Gasgemisch am Ausgang des 3. Reaktors | 534,43 | 31,36 | 201,49 | 472,2 |

Die MON-Oktanzahl des erhaltenen Produkts beträgt 85.

Das erfindungsgemäße Verfahren erlaubt somit einerseits die Ausbeute an Benzin mit einer hohen Oktanzahl vom 93,86 % auf 94,74 % zu erhöhen und andererseits auch dessen Qualität durch Erhöhung der Oktanzahl um 8 Punkte zu verbessern.

## Patentansprüche

1. Verfahren zur Herstellung von Benzin mit hoher Oktanzahl durch katalytisches Reformieren eines Gemisches aus Wasserstoff und Kohlenwasserstoffen durch Hindurchleiten dieses Gemisches durch einen in Form eines Hohlzylinders angeordneten Platin-Rhenium-Katalysator bei 450 - 500 °C und einem Druck von 1,5 - 3 MPa in einer zur Zylinderachse senkrechten Richtung von der Zylinderachse zu dessen Umfang hin, dadurch gekennzeichnet, daß das Hindurchleiten des Einsatzgemisches mit einer Raumgeschwindigkeit von 1,5 - 1,8 h⁻¹ erfolgt.

2. Verfahren nach Anspruch 1, dadurch gekennzeichnet, daß das Hindurchleiten des Einsatzgemisches bei einem Volumenverhältnis von wasserstoffhaltigem Gas zu den Kohlenwasserstoffen wie 1200 - 1800 Nm³/Nm³ KW erfolgt.

3. Reaktor zur Durchführung des Verfahrens gemäß Anspruch 1 oder 2, enthaltend ein Gehäuse (1) mit Öffnungen (2,3) zum Eintritt des Einsatzgemisches und zum Austritt von Katalysat, einen im Gehäuse zu dessen Außenwandung und der Gehäuseinnenfläche beabstandet angeordneten hohlen Einsatz (5) mit einer Innen- (7) und einer Außenwand (6), die koaxial angeordnet und mit Durchlässen (8,9) versehen sind, wobei an beiden Stirnseiten des Einsatzes Abdeckelemente (11,12) angeordnet sind, von denen das eine (11) ringförmig ausgebildet, auf der Seite der Eintrittsöffnung für das Einsatzgemisch und zwischen der Innenfläche des Gehäuses und der Innenwand des Einsatzes angeordnet ist, und das andere Abdeckelement (12) die Form eines Kreises aufweist, auf der Seite der Austrittsöffnung für das Katalysat und die Stirnseite des Einsatzes vollständig abdeckbar angeordnet ist, dadurch gekennzeichnet, daß die Innenwand (7) des Einsatzes (5) zylindrisch ausgebildet ist, wobei deren Durchlässe (9) so angeordnet sind, daß sich der Abstand zwischen ihnen in Richtung der Achse des Einsatzes von der Stirnseite an der Eintrittsöffnung für das Einsatzgemisch bis zur anderen Stirnseite hin verringert.

4. Reaktor nach Anspruch 3, dadurch gekennzeichnet, daß der Abstand zwischen den Durchlässen (9) sich um das 1,2-2,5-fache verringert.

5. Reaktor zur Durchführung des Verfahrens gemäß Anspruch 1 oder 2, enthaltend ein Gehäuse (1) mit Öffnungen (2,3) zum Eintritt in des Einsatzgemisches und zum Austritt von Katalysat, einen im Gehäuse zu dessen Außenwandung und der Gehäuseinnenfläche beabstandet angeordneten hohlen Einsatz (5) mit einer Innen- (7) und einer Außenwand (6), die koaxial angeordnet und mit Durchlässen (8,9) versehen sind, wobei an beiden Stirnseiten des Einsatzes Abdeckelemente (11,12) angeordnet sind, von denen das eine (11) ringförmig ausgebildet, auf der Seite der Eintrittsöffnung für das Einsatzgemisch und zwischen der Innenfläche des Gehäuses und der Innenwand des Einsatzes angeordnet ist, und das andere Abdeckelement (12) die Form eines Kreises aufweist, auf der Seite der Austrittsöffnung für das Katalysat und die Stirnseite des Einsatzes vollständig abdeckbar angeordnet ist, dadurch gekennzeichnet, daß die Innenwand (7) des Einsatzes einen Durchmesser aufweist, der sich in Richtung der Achse (18) des Einsatzes von dessen Stirnseite an der Eintrittsöffnung für das Einsatzgemisch bis zur anderen Stirnseite hin erhöht.

6. Reaktor nach Anspruch 5, dadurch gekennzeichnet, daß die Innenwand (7) des Einsatzes konisch ausgebildet ist.

7. Reaktor nach Anspruch 5, dadurch gekennzeichnet, daß die Innenwand (7) des Einsatzes im Axialschnitt gesehen stufenförmig ausgebildet ist.

8. Reaktor nach Anspruch 7, dadurch gekennzeichnet, daß die Innenwand (7) des Einsatzes im Axialschnitt gesehen deart stufenförmig ausgebildet ist, daß die axiale Querschnittsfläche der Stufen sich in Richtung der Achse (18) des Einsatzes von dessen Stirnseite an der Eintrittsöffnung für das Einsatzgemisch bis zur anderen Stirnseite hin erhöht.

9. Reaktor nach Anspruch 8, dadurch gekennzeichnet, daß die axiale Querschnittsfläche der Stufen sich um das 1,2 - 2,5-fache erhöht.

10. Reaktor nach einem der Ansprüche 3 bis 9, dadurch gekennzeichnet, daß die Abdeckelemente aus zwei oder mehreren Teilen bestehen.

## Claims

1. A method of producing motor fuel with a high octane number by catalytic reforming of a mixture of hydrogen and hydrocarbons by passing this mixture through a platinumrhenium catalyst arranged in the form of a hollow cylinder, at 450 to 500°C and at a pressure of 1.5 to 3 MPa, in a direction perpendicular to the cylinder axis from the cylinder axis towards its circumference, characterised in that the passage of the charge mixture takes place with a spatial velocity of 1.5 to 1.8 h⁻¹.

2. A method according to claim 1, characterised in that the passage of the charge mixture takes place at a volume ratio of hydrogen-containing gas to hydrocarbons (HC) of 1200 to 1800 Nm³/Nm³ HC.

3. A reactor for carrying out the method according to claim 1 or 2, comprising a housing (1) with openings (2,3) for the inlet of the charge mixture and for the outlet of catalysate, a hollow insert (5) which can be arranged in the housing spaced apart from its outer wall and the housing inner surface, which insert has an inner wall (7) and an outer wall (6) which are disposed coaxially and are provided with passages (8,9), wherein at both end faces of the insert there are provided cover elements (11,12), one of which (11) is of annular shape and is arranged at the inlet opening end for the charge mixture and between the inner surface of the housing and the inner wall of the insert, and the other cover element (12) is in the form of a circle and at the outlet opening end for the catalysate and the end face of the insert is arranged so that it can be completely covered, characterised in that the inner wall (7) of the insert (5) is of cylindrical form, wherein its passages (9) are arranged so that the distance between them in the direction of the axis of the insert decreases from the end face at the inlet opening for the charge mixture up to the other end face.

4. A reactor according to claim 3, characterised in that the distance between the passages (9) decreases by 1.2 to 2.5 fold.

5. A reactor for carrying out the method according to claim 1 or 2, comprising a housing (1) with openings (2,3) for the inlet of the charge mixture and for the outlet of catalysate, a hollow insert (5) which can be arranged in the housing spaced apart from its outer wall and the housing inner surface, which insert has an inner wall (7) and an outer wall (6) which are disposed coaxially and are provided with passages (8,9), wherein at both end faces of the insert there are provided cover elements (11,12), one of which (11) is of annular shape and is arranged at the inlet opening end for the charge mixture and between the inner surface of the housing and the inner wall of the insert, and the other cover element (12) is in the form of a circle and at the outlet opening end for the catalysate and the end face of the insert is arranged so that it can be completely covered, characterised in that the inner wall (7) of the insert has a diameter which increases in the direction of the axis (18) of the insert from its end face at the inlet opening for the charge mixture up to the other end face.

6. A reactor according to claim 5, characterised in that the inner wall (7) of the insert is conically formed.

7. A reactor according to claim 5, characterised in that, viewed in axial section, the inner wall (7) of the insert is of stepped form.

8. A reactor according to claim 7, characterised in that, viewed in axial section, the inner wall (7) of the insert is stepped in such a way that the axial cross-sectional area of the steps increases in the direction of the axis (18) of the insert from its end face at the inlet opening for the charge mixture up to the other end face.

9. A reactor according to claim 8, characterised in that the axial cross-sectional area of the steps increases by 1.2 to 2.5 fold.

10. A reactor according to any one of claims 3 to 9, characterised in that the cover elements comprise two or more parts.

## Revendications

1. Procédé de production d'essence à haut indice d'octane, par reformage catalytique d'un mélange d'hydrogène et d'hydrocarbures consistant à faire passer ce mélange à travers un catalyseur au platine-rhénium agencé sous la forme d'un cylindre creux, à 450-500°C, et à une pression de 1,5-3 MPa, dans une direction perpendiculaire à l'axe du cylindre allant de l'axe du cylindre à sa périphérie, caractérisé en ce que le passage du mélange initial s'effectue à une vitesse spatiale de 1,5 - 1,8 h⁻¹.

2. Procédé selon la revendication 1, caractérisé en ce que le passage du mélange initial s'effectue à un rapport volumique entre le gaz hydrogéné et les hydrocarbures de 1200 - 1800 Nm³/Nm³ KW.

3. Réacteur pour la mise en oeuvre du procédé selon la revendication 1 ou 2, comprenant une enveloppe (1) qui présente des ouvertures (2, 3) pour l'entrée du mélange initial et pour la sortie d'un produit de la catalyse, une garniture creuse (5) disposée dans l'enveloppe, avec écartement entre sa paroi extérieure et la surface intérieure de l'enveloppe, comprenant une paroi intérieure (7) et une paroi extérieure (6) qui sont disposées coaxialement et munies de passages (8, 9), cependant qu'aux deux côtés frontaux de la garniture, sont disposés des éléments de fermeture (11, 12) dont l'un (11), de forme annulaire, est disposé sur le côté de l'ouverture d'entrée du mélange initial et entre la surface intérieure de l'enveloppe et la paroi intérieure de la garniture, et l'autre élément de fermeture (12) présente la forme d'un cercle, sur le côté de l'ouverture de sortie du produit de la catalyse, et le côté frontal de la garniture est disposé de façon à pouvoir être entièrement fermé, caractérisé en ce que la paroi intérieure (7) de la garniture (5) est de forme cylindrique, ses passages (9) étant disposés de manière que l'écartement entre eux décroisse dans la direction de l'axe de la garniture, du côté frontal situé à l'ouverture d'entrée du mélange initial jusqu'à l'autre côté frontal.

4. Réacteur selon la revendication 3, caractérisé en ce que l'écartement entre les passages (9) décroît d'un facteur de 1,2 - 2,5.

5. Réacteur pour la mise en oeuvre du procédé selon la revendication 1 ou 2, comprenant une enveloppe (1) qui présente des ouvertures (2, 3) pour l'entrée du mélange initial et pour la sortie du produit de la catalyse, une garniture creuse (5) disposée dans l'enveloppe, avec écartement entre sa paroi extérieure et la surface intérieure de l'enveloppe, comprenant une paroi intérieure (7) et une paroi extérieure (6) qui sont disposées coaxialement et munies de passages (8, 9), cependant qu'aux deux côtés frontaux de la garniture, sont disposés des éléments de fermeture (11, 12) dont l'un (11), de forme annulaire, est disposé sur le côté de l'ouverture d'entrée du mélange initial et entre la surface intérieure de l'enveloppe et la surface intérieure de la garniture, et l'autre élément de fermeture (12) présente la forme d'un cercle, sur le côté de l'ouverture de sortie du produit de la catalyse, et le côté frontal de la garniture est disposé de façon à pouvoir être entièrement fermé, caractérisé en ce que la paroi intérieure (7) de la garniture présente un diamètre qui croît dans la direction de l'axe (18) de la garniture, de son côté frontal situé à l'ouverture d'entrée du mélange initial jusqu'à l'autre côté frontal.

6. Réacteur selon la revendication 5, caractérisé en ce que la paroi intérieure (7) de la garniture est de forme conique.

7. Réacteur selon la revendication 5, caractérisé en ce que, vue en coupe axiale, la paroi intérieure (7) de la garniture est de forme étagée.

8. Réacteur selon la revendication 7, caractérisé en ce que, vue en coupe axiale, la paroi intérieure (7) de la garniture est de forme étagée, de telle manière que la surface de section axiale des étages croisse dans la direction de l'axe (18) de la garniture, du côté frontal situé à l'ouverture d'entrée du mélange initial jusqu'à l'autre côté frontal.

9. Réacteur selon la revendication 8, caractérisé en ce que la surface de section axiale des étages croît d'un facteur de 1,2 - 2,5.

10. Réacteur selon une des revendications 3 à 9, caractérisé en ce que les éléments de fermeture sont composés de deux ou plus de deux pièces.
